# EUROPEAN PATENT APPLICATION

(11) **EP 1 705 835 A1**
(43) Date of publication of application: **27.09.2006**
(21) Application number: 05006261.1
(22) Date of filing: 22.03.2005
(51) Int. Cl.: H04L 12/28

(54) **Methods and systems for fast handover in 802.11 wireless networks**

(71) Applicant: Gemtek Systems, Inc., 302 Chu-Pei City, Hsin-Chu County (TW)
(72) Inventor: Qiang, Gang 7Fl., Unit 2, No. 28, Tai-Yuen St., Hsin-Chu County Taiwan (TW); Lee, Wang 7Fl., Unit 2, No. 28, Tai-Yuen St., Hsin-Chu County, Taiwan (TW); Hung Wen, Chen 7Fl., Unit 2, No. 28, Tai-Yuen St., Hsin-Chu County, Taiwan (TW)
(74) Representative: Winkler, Andreas Fritz Ernst

(57) **Abstract**

The present invention discloses a system and method for fast and smooth roaming in a wireless network with plural access points. In order to keep better communication quality, the client device may have dual-transceiver. One transceiver is applied for transmitting and receiving data packets to and from a current associated access point. Concurrently, the other transceiver would scan for another suitable access point and prepare to re-associate with it. As the communication quality degrades to a predetermined level, which indicates that the linkage between the client device and the currently associated access point might be broken, the transceiver in scanning mode would begin to re-associate with a new access point to reduce the latency time. After that, the transceiver originally in the linking mode would switch to scan for another suitable access point while the other transceiver is associated with the newly associated access point.

## Description

### Field of the Invention :

The present invention is related to a method for fast roaming in an 802.11 wireless network by using a client device with the ability to scan another access point while communicating with an access point, particularly to a method for fast roaming in an 802.11 network by using a client device having dual transceivers.

### Background of the Invention :

IEEE 802.11 WLAN (wireless local area network) technology is gaining popular recently, and the applications of WLAN are widespread in our daily life. The computer is generally applied as the main device for accessing Internet. However, for the demand for greater mobility, the users are provided with more and more portable devices, such as notebooks, personal digital assistants, smart phones, and Wi-Fi phones, etc. With these portable devices, the users could access Internet in any place.

Since the WLAN communication structure is based on the local access network infrastructure, the client device may access Internet via an access point (AP). The coverage range of each access point is finite. For instance, the typical wireless coverage range of an access point in WLAN system is about 100 feet to 300 feet in radius depending on the power of radio frequency (RF) and the environment. The client device therefore could access the network within the coverage cell of a certain AP. This kind of setup is quite suitable for small office or home office (SOHO), where the wireless connectivity covers a spot of area.

Besides, in a larger area, such as office compound, an airport, community, or even metropolitan, there should be a plenty of access points distributed to build up a wider coverage area. Since the client device is portable, the users would tend to move with the client device occasionally. However, due to the nature of WLAN system design, it is required to de-associate with the previous access point and re-associate with another access point as a client device moves from the coverage cell of the previous access point to that of another access point. Between the de-association and re-association procedures, the client device would lose its connectivity to the network for a very significant period of time. For certain communication services, such as voice over Internet Protocol (VoIP), video conference or real time video streaming, the linkage interruption could result in poor quality of service. Since the roaming latency is too long the conventional roaming scheme for adjacent coverage cells of access points is not suitable for supporting portable devices.

From the discussion above, the roaming latency issue has become a very critical issue for linking hot spots into a hot zone in WLAN communication systems. Hence, the solution of fast roaming in the WLAN system should be provided to allow the user with the client device to moving in high speed across the boundaries of coverage cells of plural access points. What is desired is to have fast roaming method for client devices moving among access points in the WLAN system, especially used as a public communication system in a large coverage area.

### Summary of the Invention :

In view of the aforementioned problems, the present invention provides the system and method for fast and smooth roaming in the wireless network with plural access points.

According to the purpose of the present invention, a wireless local area network (WLAN) system is disclosed. The WLAN system comprises a first access point and a second access point for providing wireless communication. The client device is coupled wirelessly to the first access point, wherein the client device is able to scan the second access point while linking with the first access point. The network management server is coupled to the first and second access points, wherein the first and second access points may determine the accessibility of the client device according to instructions from the network management server. Besides, the client device may also include dual-transceiver, namely the first transceiver and the second transceiver. The first transceiver is in a linking mode to link with first access point and the second transceiver is in a scanning mode to scan the second access point concurrently.

According to another purpose of the present invention, a client device for wireless local area network (WLAN) system is provided. The client device comprises a first transceiver to communicate with a first access point and a second transceiver to scan a second access point. The first transceiver is in a linking mode to link with the first access point and the second transceiver is in a scanning mode to scan said second access point concurrently.

According to still another purpose of the present invention, a method for fast roaming in wireless local area network is disclosed. First, the client would scan for a second access point while linking with a first access point. Next, before the linkage between the client device and the first access point is failed, the client device would be switched to link with the second access point. The client device would proceed to scan for a third access point while linked with the second access point. The handoff of access point may occur as the communication quality between the client device and the first (currently associated) access point degrades to a predetermined level.

### Brief Description of the Drawings:

Fig. 1 illustrates an embodiment of the wireless network system.
Fig. 2 is a block diagram showing the operation of the client device with dual-transceiver before handoff of access points.
Fig. 3 is a block diagram showing the operation of the client device with dual-transceiver after handoff of access points.
Fig. 4 illustrates the arrangement of plural access points in a wide area.
Fig. 5 illustrates an embodiment of a moving client device in a wireless network with plural access points before handoff of access points.
Fig. 6 illustrates an embodiment of a moving client device in a wireless network with plural access points after handoff of access points.
Fig. 7 illustrates the blackout scenario.
Fig. 8 illustrates the coverage cells with different transmission rates.

### Detailed Description of the Preferred Embodiment :

The present invention is described with the preferred embodiments and accompanying drawings. It should be appreciated that all the embodiments are merely used for illustration. Although the present invention has been described in terms of a preferred embodiment, the invention is not limited to this embodiment. The scope of the invention is defined by the claims. Modifications within the spirit of the invention will be apparent to those skilled in the art.

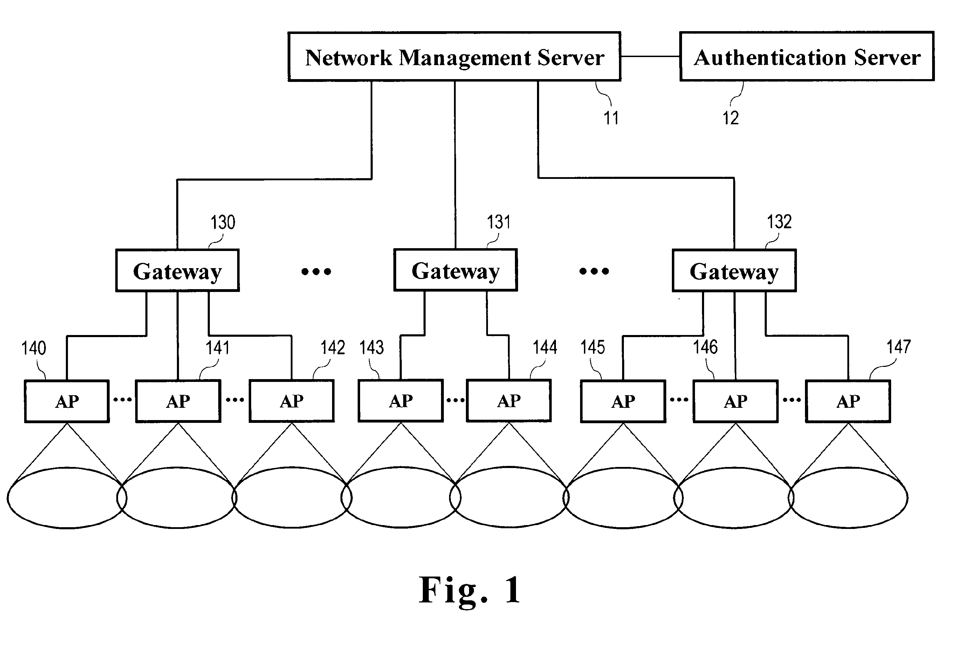

Referring to Fig. 1, a preferred embodiment of the 802.11 wireless local access network system is illustrated. The network management server 11 is applied to control the system. Usually, the network is set up such that several access points are bundled to connect through gateways to the Ethernet. In the preferred embodiment shown in Fig. 1, plural access points 140-147 are coupled to the gateway 130-132, respectively. The gateway may be an access point controller gateway. The gateways 130-132 are connected to the network management server 11 directly or via Internet, and the network management server 11 is coupled to an authentication server 12. Each access point within the system controls the accessibility of certain client device to access Internet according to the instruction from the network management server 11. The authentication server 12 is mainly used for authenticating the identity of the client device, authorizing the accessibility of the client device, or counting the bill of the client device. The authentication server 12 may also keep the user's information in a database.

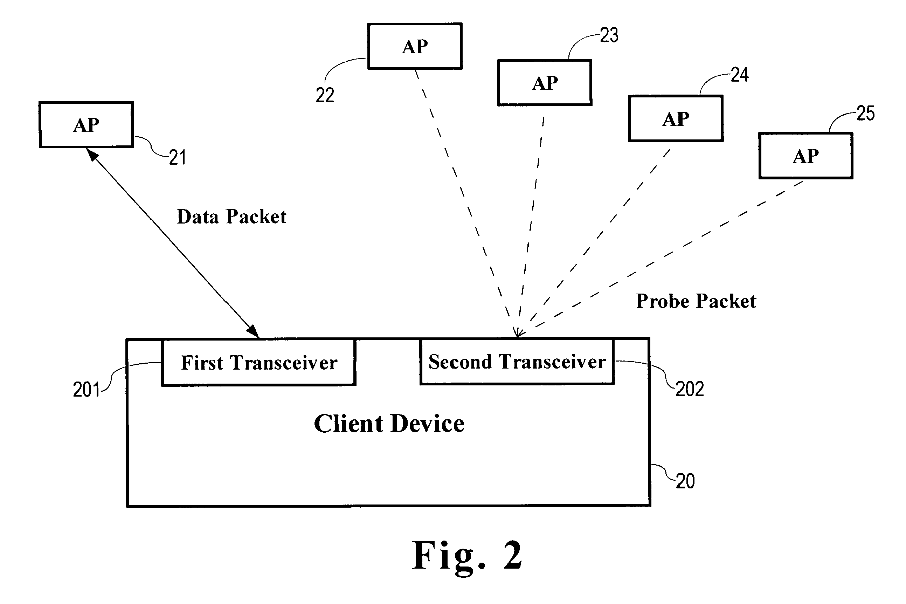

Referring to Fig. 2, an inventive concept of fast roaming in an 802.11 WLAN system is illustrated. In the preferred embodiment of the present invention, the client device 20 could have dual-transceiver, namely first transceiver 201 and second transceiver 202, to achieve fast roaming between plural access points. The first transceiver 201 is mainly used for transmitting and receiving data with the currently associated access point 21. At the same time, the second transceiver 202 would scan the neighboring access points 22-25 to prepare for re-associating with the most suitable access point. To say in another word, the scanning transceiver then turns into the primary transceiver for data transmission, while the primary transceiver previously handling the data transmission switches back to scanning mode. The dual transceivers in 802.11 client devices alternate their modes for every AP handoff. It should be note that the present invention can be applied to any type of wireless communication, and especially, all of the devices mentioned in the specification are compatible to the IEEE 802.11x standard. Wherein the x includes but not limited to a, b or g.

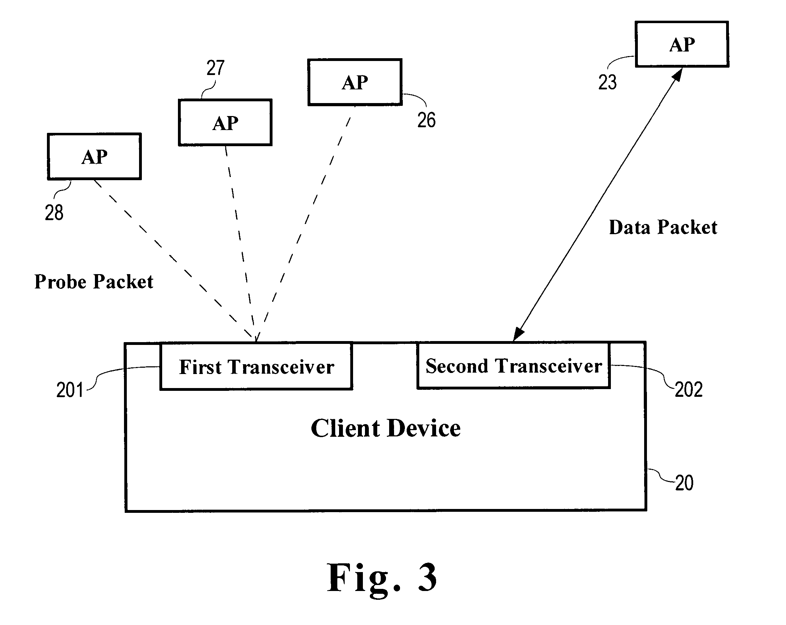

In Fig. 3, as the communication quality between the access point 21 and the first transceiver 201 degrades to a predetermined level, the second transceiver 202 would take over the job of data communication. That is, the second transceiver 202 could search for another suitable access point while the first transceiver 201 is linked with the current associated access point 21, and re-associate with the found suitable access point 23 before the linkage between the first transceiver 201 and the access point 21 is broken. The smooth handoff from an already associated access point 21 to a newly re-associated access point 23 therefore can maintain a good quality of communication linkage for a desired transmission rate.

The determination of communication quality may base on the radio signal strengths and data transmission rate between the client device 20 and current associated access point 21. The communication quality is applied as a criterion for deciding when or where to re-associate with another suitable access point in order to reduce the latency time in the procedure of access point switch. It should be noted that the present invention could still adopt other kinds of criterion or scheme to reduce the latency time.

After the second transceiver 202 re-associates with a new access point 23, the first transceiver 201 would switch to scan for another suitable access point, as the second transceiver 202 used to do. Hence, the first and second transceiver 201, 202 would exchange their jobs or responsibility repeatedly, and the excellent communication quality could be assured during the fast moving of the client device 20.

As for standard association procedure in an 802.11 wireless network with plural access points, the client information is necessary to be authenticated with the authentication server 12 for every association of access point and client device besides the preamble procedure for synchronizing the transceiver. Conventionally, the re-authentication is omitted that the authentication server 12 sending client information to the newly associated access point for pre-authentication which allows the client device to access the network. However, according to the present invention, the roaming scheme takes place within the client device. That is, one transceiver therein would obtain the link information and authentication required for next association with a potential access point, while the other transceiver is handling the data transmission with the current associated access point. Accordingly, as the handoff of the access points occurs, the client device with dual-transceiver does not require the prior knowledge about which access point the pre-authentication should be sent to.

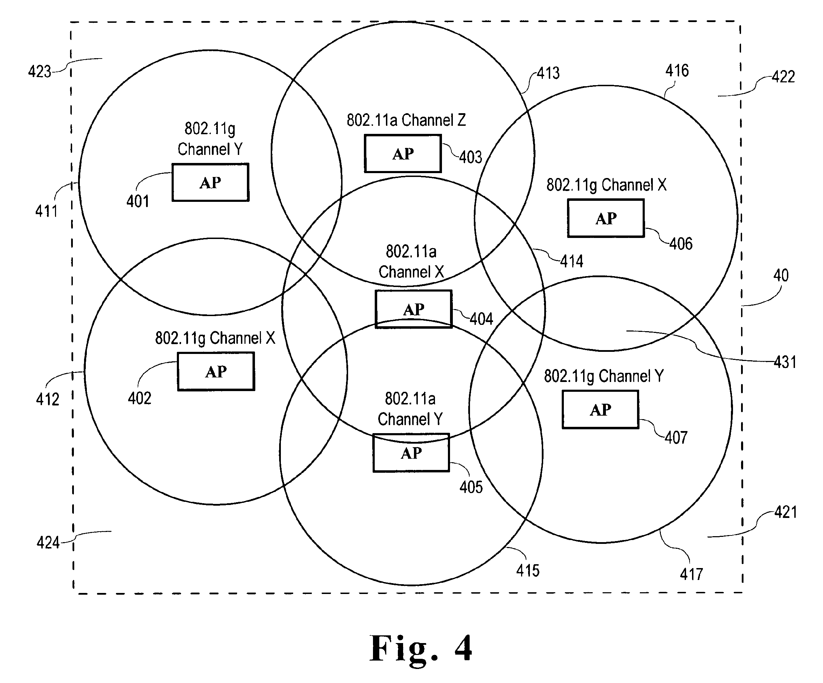

Fig. 4 illustrates a broad area 40 where requires plural access points 401-407 to build up a wider coverage range. The circles 411-417 around the access points 401-407 respectively indicate the coverage cell of each corresponding access points 401-407. As we can see, there still are certain areas that are not covered by any access point. Such areas are so-called blind spots 421-424. The number of the blind spots is usually the trade-off of the number of the access points. In other words, the more the access points are provided, the less the blind spots would be generated, and vise versa. Thus, it is unavoidable to overlap the coverage cells of neighboring access points, as shown in Fig. 4. When a user with a client device moves from the coverage cell 417 to the coverage cell 416, the client device would pass though the intersection region 431 covered by these two coverage cell. In the preferred embodiment of the present invention, the switch of associated access point could occurs therein, since the region 431 is positioned both in the coverage cell 417 of access point 407 and the coverage cell 416 of access point 406.

To reduce any blind spots for the wireless connectivity, the coverage cells of APs usually need to be overlapped. The coverage cell range of an AP depends on the radio signals to noise ratio and the data transmission rate. The higher data transmission rate, the higher the signal to noise ratio radio is required. Thus, the low data transmission rate with low signal to noise ratio requirement can extend the coverage cell range. Since the overlap of the coverage cells of plural access points is required, it is necessary to eliminate the interference among the access points. Referring to Fig. 4, the basic idea is that the neighboring access points should use different frequency channel to avoid the radio interference. As we can see, the overlapped coverage cells are arranged to applied different frequency channels, and therefore the interference scenario could be well prevented. The larger overlapped areas allow the scanning transceiver more time to prepare association with the new AP for a high mobile client device.

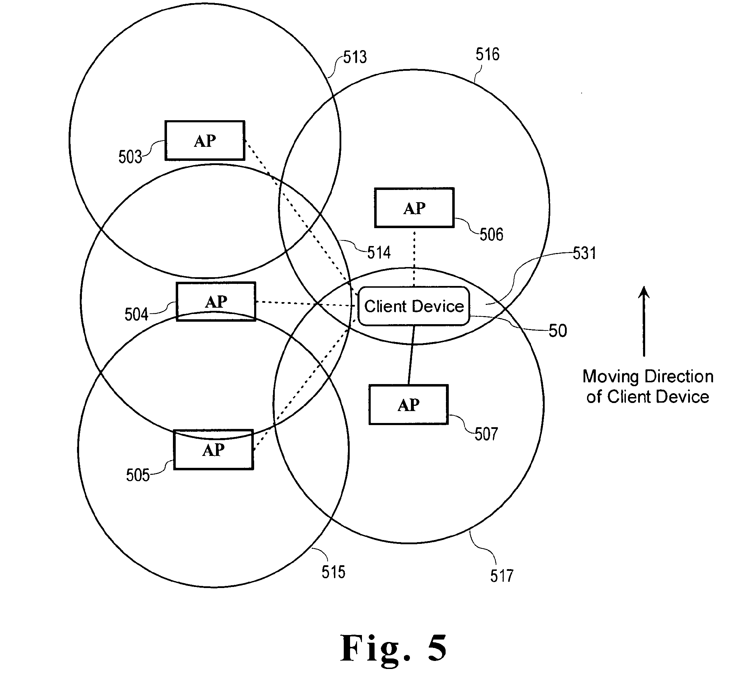

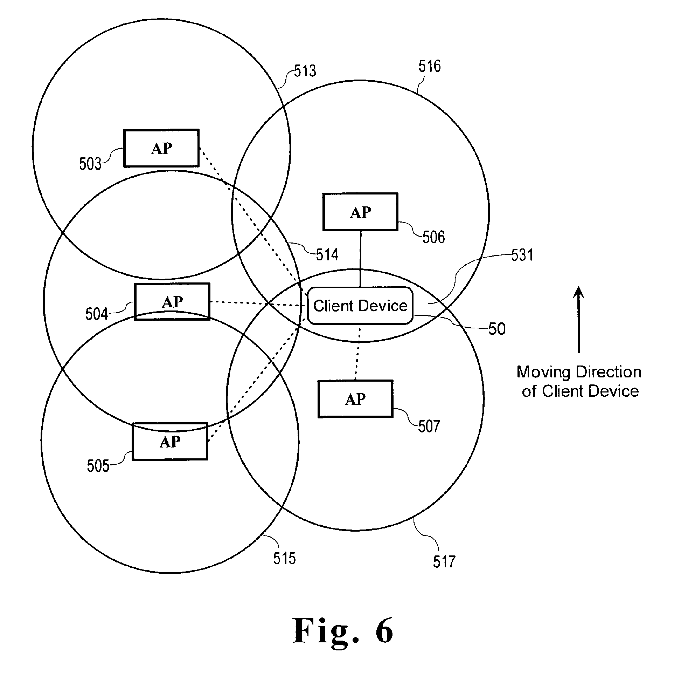

As shown in Fig. 5, the client device 50 is move from the coverage cell 517 to the coverage cell 516. Since the client device 50 are away from the access point 507, the communication quality between the client device 50 and the access point 507 would gradually degrade and result in low data transmission rate. Besides, according to the preferred embodiment of the present invention, the client device 50 should scan for other suitable access points all the time, no matter how the communication quality is. In other words, the client device 50 has prepared well to process the re-association with another access point. The dotted lines in Fig. 5 represents that the client device transmits probe packets to other access points to search for optimal access point. As the communication quality degrades to a predetermined level, the client device would re-associate with another access point 506 before the linkage between the client device and the current associated access point 507 is failed. Thus, the client device 50 could maintain the linkage status and higher data transmission rate. Then, as shown in Fig. 6, there is a data linkage between the client device 50 and the access point 506. Nevertheless, the client device 50 would still scan for another optimal access point concurrently.

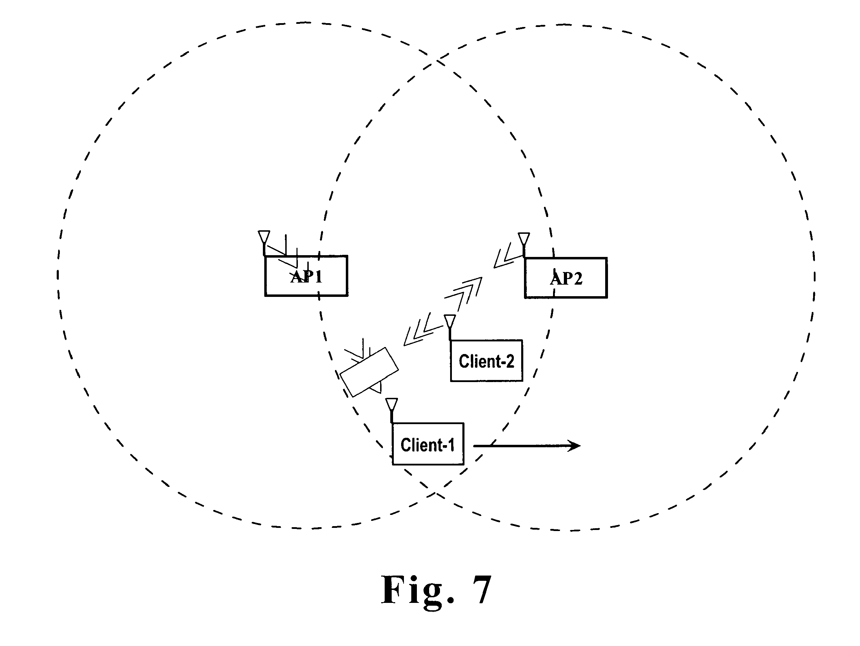

Due to the weaker radio signal received from the AP near the cell boundaries of adjacent access points, the client device could be blackout by a nearby client device associated with an adjacent AP using the same frequency channel. FIG. 7 illustrates the blackout scenario due to radio interference by a nearby client device using the same frequency channel for the neighboring access points. Client-1 and Client-2 are currently associated with AP 1 and AP 2, respectively. Client-1 is moving toward to the coverage range of AP 2 and encounters Client 2 on its way. The radio power received from Client-2 for communicating with AP 2 could be large enough to interrupt the link between Client-1 and AP 1 with the same frequency channel. Since Client-2 is not associated with AP1 but associated with AP 2, the radio transmission of Client-2 is fully controlled by AP 2. AP1 has no control over the radio transmission of Client-2. The interruption link between Client-1 and AP 1 becomes most likely.

The network of the present invention may operate in either 802.11 b/g (2.4 GHz band) or 802.11a (5 GHz band), or the mixture of 802.11 a/g/b. For most common pure 802.11g/b or 802.11a client devices, there is usually only single transceiver in the client device hardware. The current client hardware may be modified into dual-transceiver hardware. In the other hand, the current 802.11 a/g client device can be operated both in 802.11 b/g on 2.4 GHz band and 802.11a on 5 GHz band. It should be appreciated that the present invention may implemented in various combination of either 2.4 GHz or 5 GHz for 802.11 frequency bands as well as other varieties of frequency bands, such as certain licensed frequency band. One embodiment of the present invention may apply this dual-transceiver concept in the 802.11 a/ g/ b WLAN network with plural access points.

Besides, the present invention is not limited to the physical dual-transceiver built in the 802.11 client hardware. If the transceiver and base-band/Medium Access Control (MAC) processor are improved to be fast enough for switching between linked data mode and scanning mode, the fast scanning for nearby access points can therefore be achieved by using the intermittent time as the data transmission is not busy. The available access point link information collected from the fast scanning can be stored in the memory. As the access point handoff occurs, for maintaining certain communication quality, the link information stored in the memory could be used for instant roaming for the next available access point.

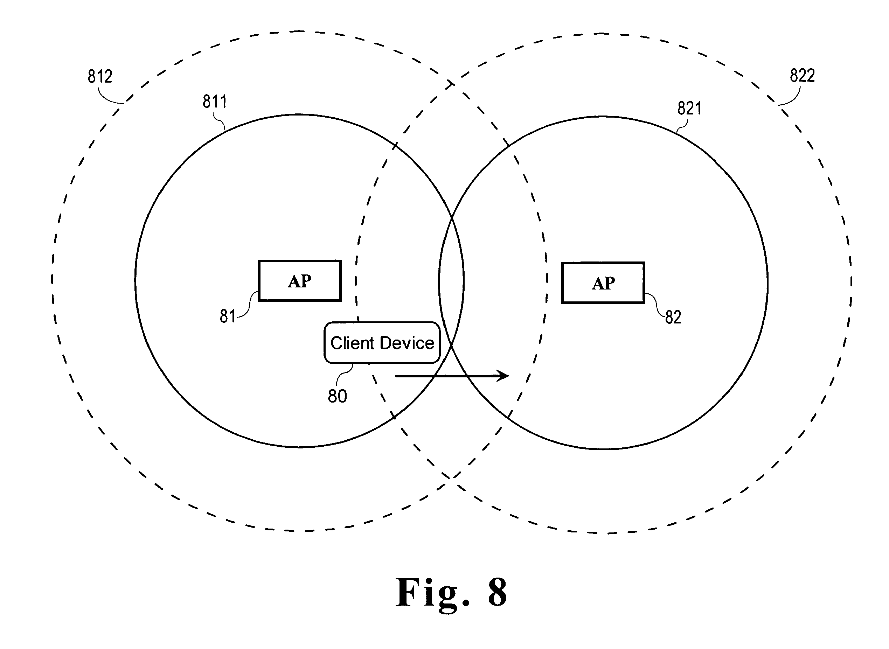

Referring to Fig. 8, the data transmission rate would vary along with the distance from the location of the access point. In other words, the lower the data transmission rate is, the larger the coverage cell would be. As we can see, the access points 81 and 82 respectively have two kinds of coverage cells 811, 812 and 821, 822. The coverage area of the cell 812 is wider than that of the cell 811, and similarly, the area of cell 822 is also wider than that of the cell 821. The coverage cells 811 and 821 represent the coverage cells with better transmission rate, and the coverage cells 812 and 822 indicate the coverage cells with less transmission rate. More cell overlaps of plural APs would allow the dual-transceiver client device more time to prepare the handoff with high mobility across the cell boundaries as indicated the overlaps. One important aspect of the present invention is that the client device can use the radio signal strengths and data transmissions rate to determine AP de-association and re-association. The operations of dual-transceiver modes can be set up in such a way that a higher data transmission rate is set for data transmission mode, while a minimal data transmission rate is set for scanning transceiver mode. Therefore, the intersection area between cells 811 and 821 is greater than that between cells 811 and 822. The larger overlapped area would grant the transceiver in the client device more time to prepare association with another access point, especially when the client device moves with higher mobility.

In conclusion, the present invention applies the concept of dual-transceiver in an 802.11 client device to significantly reduce the latency time required for the de-association with an already associated access point as well as re-association with another suitable access point. Hence, the fast handoff between access points could enable the instant roaming for 802.11 client devices moving rapidly inside the wireless network with plural access points.

As is understood by a person skilled in the art, the foregoing preferred embodiments of the present invention are illustrated of the present invention rather than limiting of the present invention. It is intended to cover various modifications and similar arrangements included within the spirit and scope of the appended claims, the scope of which should be accorded the broadest interpretation so as to encompass all such modifications and similar structure. While the preferred embodiment of the invention has been illustrated and described, it will be appreciated that various changes can be made therein without departing from the spirit and scope of the invention.

## Claims

1. A wireless local area network (WLAN) system, which comprises:
a first access point and a second access point for providing wireless communication;
a client device coupled wirelessly to said first access point, wherein said client device is able to scan said second access point while linking with said first access point; and
a network management server coupled to said first access point and said second access point, wherein said first access point and said second access point determine the accessibility of said client device according to instructions from said network management server.

2. The system as set forth in claim 1 further comprises an authentication server coupled to said network management server for authenticating the identity of said client device, authorizing the accessibility of said client device, or counting the bill of said client device.

3. The system as set forth in claim 1, wherein said client device includes a first transceiver and a second transceiver, wherein said first transceiver is in a linking mode to link with said first access point and wherein said second transceiver is in a scanning mode to scan said second access point.

4. The system as set forth in claim 3, wherein said first transceiver switches into scanning mode and said second transceiver switches into linking mode to link with said second access point when a communication quality between said client device and said first access point degrades to a predetermined level.

5. A client device for wireless local area network (WLAN) system, which comprises:
a first transceiver to communicate with a first access point; and
a second transceiver to scan a second access point.

6. The client device as set forth in claim 5, wherein said first transceiver is in a linking mode to link with said first access point and wherein said second transceiver is in a scanning mode to scan said second access point.

7. The client device as set forth in claim 6, wherein said first transceiver switches into scanning mode and said second transceiver switches into linking mode to link with said second access point when a communication quality between said client device and said first access point degrades to a predetermined level.

8. A method for roaming in wireless local area network, which comprises:
scanning for a second access point by a client device while linking with a first access point;
switching said client device to link with said second access point before the linkage between said client device and said first access point is failed; and
scanning for a third access point by said client device while linking with said second access point.

9. The method as set forth in claim 8, wherein said client device includes a first transceiver and a second transceiver, wherein said first transceiver is in a linking mode to link with first access point and said second transceiver is in a scanning mode to scan said second access point.

10. The method as set forth in claim 8, wherein said client device includes a transceiver with the ability to switch between a scanning mode and a linking mode.
